# EUROPÄISCHE PATENTSCHRIFT

(11) **EP 0 722 806 B1**
(45) Veröffentlichungstag und Bekanntmachung des Hinweises auf die Patenterteilung: **15.03.2000**
(21) Anmeldenummer: 96100632.7
(22) Anmeldetag: 18.01.1996
(51) Int. Cl.: B23K 26/08, B23K 26/02

(54) **Vorrichtung zum Schweissen von Werkstücken mit Laserstrahlung**
Apparatus for laser welding workpieces
Dispositif de soudage au laser

(30) Priorität: 23.01.1995 DE 19501869
(43) Veröffentlichungstag der Anmeldung: 24.07.1996
(73) Patentinhaber: Thyssen Laser-Technik GmbH, 52074 Aachen (DE)
(72) Erfinder: Neumann, Günter, D-52066 Aachen (DE); Klein, Rolf, Dr.-Ing., D-52146 Würselen (DE); Poprawe, Reinhart, Dr. rer. nat., D-52072 Aachen (DE)
(74) Vertreter: Eichler, Peter, Dipl.-Ing.

(56) Entgegenhaltungen:
- DE-A- 3 703 270
- US-A- 4 607 150
- US-A- 5 142 118
- PATENT ABSTRACTS OF JAPAN vol. 017 no. 552 (M-1491) ,5.Oktober 1993 & JP-A-05 154677 (KAWASAKI HEAVY IND LTD) 22.Juni 1993,

## Beschreibung

Die Erfindung bezieht sich auf eine Vorrichtung zum Schweißen von Werkstücken mit Laserstrahlung, insbesondere zum Verschweißen von Blechflanschen, bei der vor und hinter einer Schweißstelle je ein Walzenpaar mit das relativbewegte Werkstück zwischen sich führenden Walzen angeordnet ist, und mit einer Fokussiereinrichtung für die Laserstrahlung, wobei die Walzenpaare an einem Spannkörper gelagert sind, der mit der Fokussiereinrichtung der Laserstrahlung zu einer Handhabungseinheit zusammengebaut ist.

DE-A-3 703 270 offenbart eine stationäre Vorrichtung zur Herstellung von Rohren bzw. Dosen, bei der beidseitig einer Schweißstelle je ein Walzenpaar mit, das relativbewegte Werkstück zwischen sich führenden Walzen angeordnet ist. Die bekannten Walzenpaare sind an einem Maschinengestell befestigt, deren obere Rollen jeweils an einem oberen Tragarm und deren untere Rollen jeweils an einem Unterarm des Maschinengestells lagern. Des weiteren ist die bekannte Vorrichtung mit einen Innenführungswerkzeug und einem Außenführungswerkzeug versehen, um einen Blechzuschnitt einem Kalibrierwerkzeug zu zuführen, in dessen Nähe die Verschweißung vorgenommen wird. Die Führungswerkzeuge und die Walzenpaare sowie die Arme der letzteren bilden eine auf die Herstellung von Rohren bzw. Dosen spezialisierte stationäre Vorrichtung.

Aus der JP-A-5-154677 ist eine Vorrichtung mit den eingangs genannten Merkmalen bekannt. Die Walzenpaare sind als Andruckmittel für Blechflansche ausgebildet und dazu von Druckzylindern beaufschlagt. Die Fokussiereinrichtung ist zwischen den Walzenpaaren parallel zu deren Achsen angeordnet und dabei in der Nähe der Schweißstelle sehr voluminös ausgebildet.

Aus der US-A-4 607 150 ist eine Schweißvorrichtung mit Walzenpaaren bekannt, die beidseitig neben der Schweißstelle angeordnet sind. Sie drücken zwei Werkzeuge zwischen sich zusammen, so bald ein Walzenpaar von einem die Fokussiereinheit aufweisenden Führungsgehäuse angestellt wird.

Demgegenüber liegt der Erfindung die Aufgabe zugrunde, eine Vorrichtung mit den eingangs genannten Merkmalen so zu verbessern, daß sie insbesondere zum Herstellen von Blechflanschen besser geeignet ist.

Diese Aufgabe wird dadurch gelöst, daß mindestens ein Walzenpaar als Antriebswalzenpaar ausbildet ist, und daß zwischen den beiden Walzenpaaren im Bereich der Schweißstelle relativ zu den Walzenpaaren bewegliche, auf die Werkstücke wirkende Andruckmittel vorhanden sind, die mit dem Spannkörper eine Baueinheit bilden.

Der Zusammenbau des Spannkörpers und der Fokussiereinrichtung vereinfacht den Gesamtaufbau. Dieser wird insgesamt kleiner. Er wird infolgedessen auch leichter und daher besser geeignet für Handhabungsgeräte, die schnell verstellbar sein sollen, was durch Massearmut besser zu erreichen ist.

Die Anordnung der Walzenpaare in Relativbewegungsrichtung vor und hinter der Schweißstelle bewirkt zum einen eine sehr gute Längsführung, also in Relativbewegungsrichtung der Werkstücke. Zugleich bewirkt die Breite der Walzen auch eine ausreichend spaltfreie Führung der Werkstücke quer zu deren Relativbewegungsrichtung. Die spezielle Anordnung der Walzenpaare bewirkt eine vorteilhafte Kombination der Längsführung und der Querführung der Werkstücke, ohne daß dazu etwa weitere Führungswalzen erforderlich wären. Ein weiterer Vorteil der vorgenannten Vorrichtung ist es, daß die in Relativbewegungsrichtung hintereinander erfolgende Anordnung der Walzenpaare weitgehend unempfindlich gegen Abänderungen der Bearbeitungskontur oder der Geometrie der Werkstücke ist. Die Ausbildung der Spannmittel hat also wenig Einschränkungen bezüglich der zu bearbeitenden Werkstücke zur Folge. Gleichwohl ist sie bei allen möglichen Arten von Längsnahtschweißungen einzusetzen. Wie beispielsweise im Überlappstoß. Die Positionierung der Schweißstelle im Führungsbereich des Walzenpaares ist beliebig, so daß die Fügegeometrie der Werkstücke nicht nur eine einfache lineare Naht sein kann, sondern auch eine komplexe, geschlossene Bahnkontur. Dabei können die Werkstükke aus beliebigen schweißbaren Werkstoffen bestehen, wie z.B. Stahlblech, Aluminiumblech oder thermoplastischem Kunststoff. Das Schweißen bzw. Fügen kann kontinuierlich oder getaktet erfolgen.

Darüber hinaus wird die Führung der Werkstücke dadurch verbessert, daß mindestens ein Walzenpaar als Antriebswalzenpaar ausgebildet ist. Der Antrieb erfolgt mithin in unmittelbarer Nachbarschaft zur Schweißstelle. Einflüsse entfernt angeordneter Antriebsmittel entfallen, beispielsweise dynamische Einflüsse, wie auch Einflüsse von Werkstückinstabilitäten bei dünnen Werkstücken. Die Ausbildung mindestens eines Walzenpaares als Antriebswalzenpaar hat auch eine erhebliche Universalisierung der Vorrichtung zur Folge. Ursache ist die Kombination von Führungs- und Antriebsfunktion im Bereich des Spannkörpers der Vorrichtung. Dies bedeutet nicht nur eine Vereinfachung der Konstruktion insgesamt, sondern ermöglicht die gewünschte spaltfreie Führung der Werkstücke auch dann, wenn diese ruhend gelagert sind. Die Vorrichtung kann also stationär oder mobil eingesetzt werden, wobei sie durch die Antriebswalzen an den Werkstücken entlang der Bearbeitungskontur geführt wird.

Dadurch daß zwischen den beiden Walzenpaaren im Bereich der Schweißstelle bewegliche, relativ zu den Walzenpaaren auf die Werkstücke wirkende Andruckmittel vorhanden sind, die mit dem Spannkörper eine Baueinheit bilden, kann das Aneinanderliegen der Werkstücke bzw. Fügepartner und damit die Spaltfreiheit unmittelbar an der Schweißstelle beeinflußt werden. Darüber hinaus ist mit den Andruckmitteln eine Genaupositionierung der Fügepartner an der Schweißstelle möglich, insbesondere in vertikaler Richtung. Das ist für eine präzise Fokussierung der Laserstrahlung an der Schweißstelle wichtig. Darüber hinaus sind die Andruckmittel in den Spannkörper integriert. Das ist im Hinblick auf einen flexiblen Einsatz der Vorrichtung von Vorteil.

Die Vorrichtung kann so ausgebildet sein, daß die Andruckmittel eine oberhalb der Schweißstelle angeordnete Andruckplatte aufweisen, die mit einer Durchlaßöffnung für die Laserstrahlung versehen ist. Die Andruckplatte nimmt oberhalb der Schweißstelle einen diese horizontal umgebenden Bereich ein, wobei die Durchlaßöffnung nahe der Schweißstelle vergleichsweise klein sein kann, weil die Laserstrahlung auf einen kleinen Bereich fokussiert ist.

Die Vorrichtung kann des weiteren so ausgestaltet werden, daß die Andruckmittel einen unterhalb der Schweißstelle angeordneten Gleitbock aufweisen, der in einem die Werkstücke im Bereich der Schweißstelle druckbeaufschlagenden Abstand von der Andruckplatte angeordnet ist. Infolgedessen kann der Gleitbock gemeinsam mit der Andruckplatte auf die Fügepartner drücken, wobei jeglicher etwa noch vorhandene Spalt eliminiert wird.

Zur Anpassung an unterschiedlich dicke Fügepartner wird die Vorrichtung so ausgebildet, daß die Andruckplatte und/ oder der Gleitbock im Spannkörper vertikal verstellbar ist bzw. sind. Die Verstellbarkeit kann auch dazu benutzt werden, eine Anpassung an vertikal höher oder tiefer geführte Werkstücke zu erreichen.

Die Vorrichtung kann so ausgestaltet werden, daß die Durchlaßöffnung der Andruckplatte zur Schweißstelle hin konisch verjüngt ausgebildet ist und/oder quer zum Laserstrahl orientierte Blas- und/oder Gasableitungskanäle oder -einrichtungen aufweist. Die konische Verjüngung der Durchlaßöffnung der Andruckplatte zur Schweißstelle hin bedeutet eine Anpassung der Andruckplatte an übliche Ausbildungen von Fokussiereinrichtungen, die schweißseitig eine konische Düse aufweisen. Eine Abstimmung der konischen Verjüngung der Andruckplatte auf derartige Düsenkonfigurationen erlaubt es, die Fokussiereinrichtung dicht an die Schweißstelle zu bringen und/ oder im Bereich zwischen der Düse der Fokussiereinrichtung und der Durchlaßöffnung weitere Einrichtungen vorzusehen, wie Gaszuleitungen. Quer zum Laserstrahl orientierte Blas- und/ oder Gasableitungskanäle oder -einrichtungen ermöglichen es, bei der Bearbeitung entstehende Schweißrauche oder Schweißspritzer von der Optik der Fokussiereinrichtung fernzuhalten. Mit diesen Einrichtungen können auch schädliche Dämpfe entfernt werden, die beispielsweise gesundheitsbeeinträchtigende Schadstoffe enthalten, wie sie beispielsweise bei der Bearbeitung von CrNi-Stählen entstehen.

Bei einer vorteilhaften Ausgestaltung der Vorrichtung ist vorgesehen, daß der Gleitbock im Bereich der Schweißstelle eine die ausgeführte Schweißnaht frei lassende Nut aufweist, die bedarfsweise mit einem Gaskanal in Verbindung steht. Infolgedessen erfolgt durch den Gleitbock keine unmittelbare Druckeinwirkung auf die Schweißnaht, deren Unterseite im Schweißstellenbereich freibleibt. Wenn die Nut mit einem Gaskanal in Verbindung steht, kann der Schweißnahtwurzel zur Unterstützung ein Schutzgas zugeführt werden. Dabei wird nicht nur erreicht, daß Schmelze nicht abfließt, sondern es wird auch eine Oxidation der Schweißnahtwurzel durch das Schutzgas verhindert.

Die Vorrichtung kann so ausgebildet werden, daß jedes Antriebswalzenpaar mindestens eine austauschbare Walze unterschiedlichen Durchmessers aufweist und/oder daß das Zahnradgetriebe mit druckbeaufschlagten Walzen kardanisch aufgebaut ist. Walzen mit maßlich abgestimmten Durchmessern lassen sich in einfacher Weise austauschen und passen die Vorrichtung an unterschiedliche Materialdicken der zu bearbeitenden Werkstücke an. Dabei kann auch Einfluß auf den für die Bearbeitung notwendigen Anpreßdruck der Werkstücke genommen werden. Eine Berücksichtigung der Materialdicke der zu bearbeitenden Werkstücke bzw. des für die Bearbeitung notwendigen Anpreßdrucks ist auch dadurch möglich, daß die oberen Walzen federnd gelagert und mittels je eines Kardangelenks angetrieben werden. Die Anpressung zweier Werkstücke über die Walzen erfolgt in diesem Fall unter der Einwirkung von Federkraft, die auch mittels einer pneumatischen oder hydraulischen Anpreßeinrichtung verstärkt oder davon ersetzt werden kann. Durch variablen Anpreßdruck können z.B. auch unterschiedliche Materialdicken der Werkstücke im Bereich der Schweißstelle kompensiert werden.

Um eine rutschfreie Förderung der Werkstücke zu erreichen, wird die Vorrichtung so ausgebildet, daß die Umfangsoberfläche der Walzen gerändelt ist oder einen Reibbelag aufweist.

Ein kompakter Aufbau der Vorrichtung wird dadurch erreicht, daß der Spannkörper ein Zahnradgetriebe hat, das die eingeleiteten Antriebskräfte auf alle vier Antriebswalzen gleichförmig verteilt. Der Spannkörper und das Zahnradgetriebe bilden eine Baueinheit, bei der die in Ralativbewegung vor und hinter der Schweißstelle erfolgte Anordnung der Walzen genügend Raum läßt, um das Zahnradgetriebe quer zur Relativbewegungsrichtung der Werkstücke flach auszubilden und zugleich die gleichförmige Verteilung der Antriebskräfte auf alle vier Antriebswalzen zu erreichen.

Die Vorrichtung kann so ausgestaltet werden, daß die Antriebskräfte der Antriebswalzen von einem am Spannkörper fest angeflanschten Antriebsmotor erzeugt oder mit einer flexiblen Welle von einem extern angeordneten Antriebsmotor dem Zahnradgetriebe zugeleitet werden. Bei an dem Spannkörper fest angeflanschtem Antriebsmotor erfolgt eine unmittelbare Einleitung der Antriebskräfte in das Zahnradgetriebe. Eine derartige Vorrichtung ist insbesondere für den stationären Einsatz geeignet, wenn also die Vorrichtung ortsfest ist und die Werkstücke von den Antriebswalzen gefördert werden. Für eine derartige ortsfeste Ausführung kommen als Strahlquelle vorzugsweise CO₂- oder Nd:YAG-Laser in Frage. Werden die Antriebskräfte der Antriebswalzen mit einer flexiblen Welle an das Zahnradgetriebe übertragen, so ist der Spannkörper vom Gewicht des Antriebsmotors entlastet und die Vorrichtung eignet sich insbesondere für den flexiblen Einsatz, wenn sie also bewegt wird. Eine solche Bewegung der Vorrichtung kann beispielsweise durch flexible Handhabungsgeräte erfolgen, wie z.B. Knickarmroboter, welche komplexe dreidimensionale Bauteilkonturen bearbeiten sollen.

Weitere Flexibilität der Vorrichtung wird dadurch erreicht, daß die Walzenpaare paarweise fest montierte Walzen haben und im Abstand paarweise zueinander einstellbar sind. Die Einstellung wird einfacher und damit schneller möglich.

Die Vorrichtung kann so gestaltet werden, daß die Fokussiereinrichtung im Winkel und/ oder im Abstand zur Schweißstelle einstellbar ist.

Insbesondere bei flexibel einzusetzenden Vorrichtungen ist es wichtig, daß der Laser nur dann eingeschaltet werden kann, wenn an der Schweißstelle ein Werkstück vorhanden ist. Die Vorrichtung wird infolgedessen dahingehend weitergebildet, daß sie das Vorhandensein eines Werkstücks an der Schweißstelle überprüfende und den Laser im Vorhandenseinsfall freigebende Sensoren aufweist.

Zur Überwachung des Schweißprozesses wird die Vorrichtung so ausgebildet, daß sie eine Sensorik aufweist, mit der ein Plasma der Schweißstelle durch die Durchlaßöffnung der Andruckplatte hindurch zu überwachen ist.

Die Erfindung wird anhand eines in der Zeichnung dargestellten Ausführungsbeispiels näher erläutert. Es zeigt:
- Fig.1: eine schematisierte Seitenansicht der Vorrichtung,
- Fig.2: eine Aufsicht auf die Vorrichtung der Fig.1, und
- Fig.3: eine schematisierte Schnittdarstellung längs der Schnittlinie A-A der Fig.1.

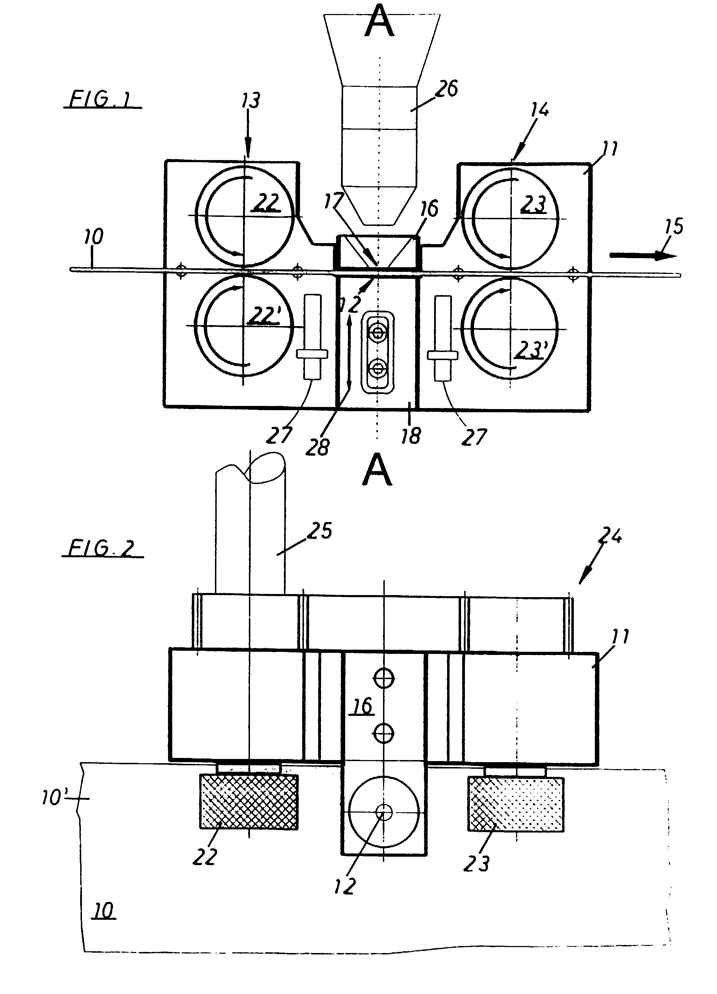

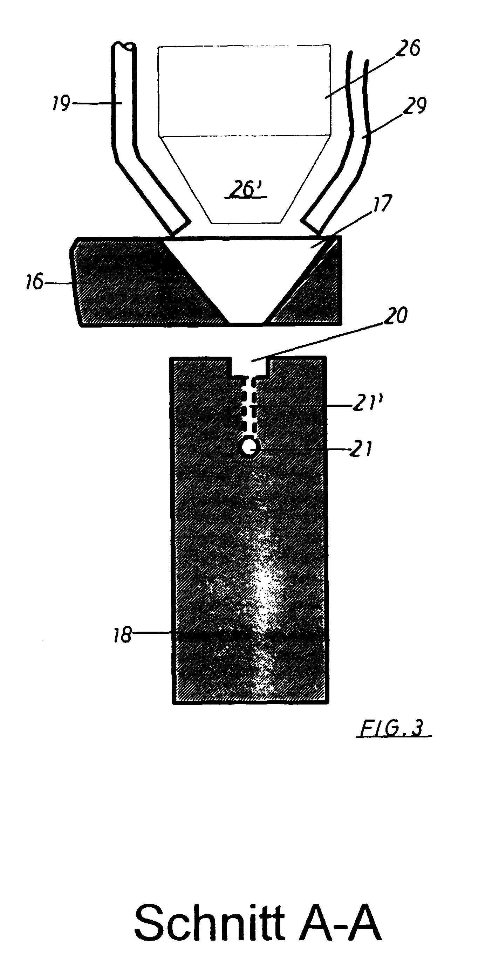

Die in den Fig.1,2 dargestellte Vorrichtung hat einen im wesentlichen quaderförmigen Spannkörper 11, der als Gehäuse bzw. als Gestell zur Lagerung zweier Walzenpaare 13,14 ausgebildet ist. Die Walzen 22,22' des Walzenpaares 13 und die Walzen 23,23' des Walzenpaares 14 sind jeweils fest zueinander montiert, beispielsweise auf einem Schlitten für jedes Walzenpaar 13 oder 14. Derartige Schlitten können relativ zueinander verstellbar sein, um den Abstand der Walzenpaare 13, 14 zueinander zu verändern. Die Schlitten zur Lagerung der Walzenpaare 13,14 bzw. anderweitige Lagerungsmittel für die Walzen 22,22' und 23,23' sind im Einzelnen nicht dargestellt.

Zwischen den Walzen 22,22' und 23,23' befindet sich ein Werkstück 10. Das Werkstück 10 ist als Blech dargestellt, dessen Rand 10' vom Außenumfang der Walzen beaufschlagt ist.

Die Walzen haben also zwischen sich jeweils einen Spalt, in dem sich das Werkstück 10 befindet. In der Praxis wird das Werkstück beispielsweise von zwei Blechen gebildet, deren Ränder parallel aneinanderliegen bzw. die einen Überlappstoß bilden. Der Überlappstoß oder die Ränder der Bleche werden durch die Walzen zusammengedrückt, so daß ein aufgrund der Toleranzen der Werkstücke, des Verzugs der Werkstücke oder der Formgebung der Werkstücke beeinflußter Spalt zwischen ihren aneinanderliegenden Flächen ausgeschlossen ist.

Mit den in Fig.1 dargestellten halbkreisförmigen Pfeilen ist angedeutet, daß mindestens ein Walzenpaar als Antriebswalzenpaar ausgebildet ist. Bei mindestens einem Antriebswalzenpaar, z.B.14, ist mindestens eine Walze, z.B.23, als Antriebswalze ausgebildet. Diese Antriebswalze 23 bzw. alle Antriebswalzen 22,22',23,23' ziehen bzw. schieben das von ihnen eingeklemmte Werkstück 10 in Relativbewegungsrichtung 15. Das Werkstück 10 und/oder der Spannkörper 11 bewegen sich also relativ in Richtung 15. Um das Werkstück 10 bzw. mehrere Werkstücke in Relativbewegungsrichtung 15 transportieren zu können, können die Walzen mit einem Reibbelag oder mit einer Rändelung versehen sein, welche eine bessere Kraftübertragung gewährleisten.

Der Antrieb der Walzen 22,22',23,23' erfolgt über ein Zahnradgetriebe 24, das in geeigneter Weise an dem Spannkörper 11 angebracht bzw. gelagert ist. Die von dem Zahnradgetriebe 24 gleichmäßig auf alle Walzen verteilten Antriebskräfte werden in geeigneter Weise in das Getriebe eingeleitet, wobei sie von einem Antriebsmotor erzeugt werden, der entweder am Spannkörper 11 fest angeflanscht ist oder der vom Spannkörper 11 distanziert angeordnet ist und dessen Antriebskräfte mit der in Fig.2 schematisch angedeuteten flexiblen Welle 25 in das Zahnradgetriebe 24 eingeleitet werden. Der Motor ist beispielsweise ein Gleichstrommotor.

Um unterschiedlich dicke Werkstücke 10 bearbeiten zu können, muß der Spalt zwischen zwei Walzen 22,22' bzw. 23,23' entsprechend angepaßt sein. Hierzu können Walzen mit maßlich abgestimmten Durchmessern eingesetzt werden, die in einfacher Weise ausgetauscht werden. Beispielsweise werden oben durchmesserschwächere Walzen 22 und 23 eingesetzt. Es ist auch möglich, die oberen Walzen 22,23 federnd zu lagern und mittels eines Kardangelenks anzutreiben. Die Walzen 22,23 drükken dann infolge der Federkraft auf entweder dickere oder dünnere Werkstücke, wobei die Federkraft durch pneumatische oder hydraulische Einrichtungen verstärkt oder ersetzt werden kann.

Die Bearbeitung der Werkstücke 10 erfolgt mit Laserstrahlung, die von einer Fokussiereinrichtung 26 auf die Schweißstelle 12 fokussiert wird. Die Laserstrahlung wird vorzugsweise mit einem CO₂-Laser oder mit einem Nd:YAG-Laser erzeugt, wobei der letztgenannte insbesondere in Frage kommt, wenn die Laserstrahlung mit einem flexiblen Lichtleitkabel zugeführt wird. Fig.1 zeigt die Fokussiereinrichtung 26 in schematischer Darstellung mit schweißstellenseitig konisch verjüngter Gasdüse, durch die koaxial zur Laserstrahlung ein Inertgas auf die Oberfläche der Schweißnaht gebracht wird.

Im Bereich der Schweißstelle 12 sind Andruckmittel vorhanden, nämlich eine Andruckplatte 16 oberhalb der Schweißstelle 12 und ein Gleitbock 18 unterhalb der Schweißstelle 12. Zumindest eines dieser Andruckmittel ist relativverstellbar, was in Fig.1 durch den Doppelpfeil 28 angedeutet wurde. Durch den Abstand der Andruckplatte 16 und des Gleitbocks 18 voneinander wird der Andruck auf die Werkstücke 10 bzw. auf die Blechflansche bestimmt. Die Andruckkräfte müssen so groß sein, daß ein spaltfreier Durchlauf an der Schweißstelle 12 gewährleistet ist. Die Andruckmittel 16,18 sind so angeordnet, daß ihr Durchlaufspalt mit dem Walzenspalt der Walzenpaare 13,14 fluchtet. Es wird dann eine Biegebeanspruchung der Werkstücke 10 vermieden. Im Falle dickerer Werkstücke und dementsprechend ausgewechselter Walzen 22,23 wird die Andruckplatte 16 entsprechend nach oben verstellt. Wird die Berücksichtigung der Materialdicke hingegen durch Einflußnahme auf den Durchmesser der unteren Walzen 22',23' vorgenommen, so kann die Andruckplatte 16 im Spannkörper 11 fest angeordnet werden und der Gleitbock 18 übernimmt sowohl die Berücksichtigung der Werkstoffdicke wie auch die Einstellung des Andruckspalts zwischen den Andruckmitteln 16,18. Das Niveau der Werkstückoberfläche bleibt dann ungeändert.

Aus den Fig.1,2 ist ersichtlich, daß die Fokussiereinheit 26 und die Andruckmittel 16,18 mit ihren Längsachsen fluchtend angeordnet sind, wobei die Längsachse durch die Schweißstelle 12 verläuft. Sowohl die Fokussiermittel 26, als auch die Andruckmittel 16,18 liegen gleichweit von den Walzenpaaren 13,14 entfernt. Es ergibt sich eine entsprechende Symmetrie der gesamten Vorrichtung, welche im Hinblick auf die Relativbeweglichkeit der Vorrichtung in Richtung 15 als auch entgegengesetzt von Vorteil ist.

Die Andruckplatte 16 ist mit einer sich zur Schweißstelle 12 konisch verjüngenden Durchlaßöffnung 17 versehen. Das ermöglicht einerseits eine Abstützung der Werkstücke 10 nahe der Schweißstelle 12 und hindert andererseits nicht, die Fokussiereinrichtung 26 dicht an die Schweißstelle heranzubringen.

Die konische Durchlaßöffnung 17 ist gemäß Fig.3 auch günstig, um neben der Düse 26' Freiraum bis zur Schweißstelle 12 zu haben. Fig.3 zeigt einen Blaskanal 19, mit dem ein Gasstrom mit beispielsweise hoher Flußrate durch die Andruckplatte zugeführt werden kann. Der Gasstrom ist im wesentlichen senkrecht zur Laserstrahlung gerichtet und bläst entstehende Schweißrauche oder Schweißspritzer weg, die auf diese Weise von der Bearbeitungsoptik fern gehalten werden. Es ist möglich eine Absaugeinrichtung vorzusehen, die über nicht dargestellte Gasableitungskanäle wirkt.

Außerdem begünstigt die konische Ausbildung der Durchlaßöffnung 17 die Beobachtung der Schweißstelle 12 mit einer Sensorik 29, durch die das Plasma zu überwachen ist. Mit der zur Plasmaüberwachung eingesetzten Sensorik 29 wird die erzeugte Nahtqualität überwacht. Dabei wird die Sensorik 29 zur Überwachung des laserinduzierten Plasmas durch die Andruckplatte 16 geschützt.

Der Gleitbock 18 ist gemäß Fig.3 mit einer Nut 20 versehen, die sich unterhalb der Schweißnaht des Werkstücks 10 zumindest im Bereich der Schweißstelle 12 erstreckt. Infolge der Nut 20 bleibt die Schweißnahtwurzel frei. Die Nut 20 ist über einen Verbindungskanal 21' mit einem Gaskanal 21 verbunden, durch den ein Stütz- bzw. Schutzgas zugeleitet werden kann.

Fig.1 zeigt schematisch dargestellte Sensoren 27 beidseitig des Gleitbocks 18 dicht unterhalb der Werkstücke 10. Diese Sensoren 27 sind induktiv, optoelektronisch oder mechanisch ausgeführt und dienen der Kontrolle auf Vorhandensein eines Werkstücks. Wenn ein solches Werkstück vorhanden ist, wird der Laser freigegeben. Andererseits wird ein Strahlaustritt ohne Werkstück verhindert, so daß infolgedessen eine Gefährdung des Bedienpersonals oder der Anlage ausgeschlossen werden.

In der Zeichnung wurde nicht dargestellt, daß die Fokussiereinrichtung 26 bzw. die gesamte Bearbeitungsoptik mit dem Spannkörper 11 zu einer Handhabungseinheit zusammengebaut sein kann. Das ist besonders vorteilhaft, wenn sowohl die Antriebskräfte bzw. Drehmomente von einem der Handhabungseinheit entfernten Ort zugeführt werden, wie auch die Laserstrahlung. In diesem Fall ergibt sich eine kompakte Einheit, die aufgrund ihres geringen Gewichts insbesondere zum Einsatz mit Knickarmrobotern od.dgl. Handhabungsgeräten geeignet ist. Mit derartigen Einheiten können auch von den schematisiert linear dargestellten Werkstücken abweichende komplexe dreidimensionale Bauteilkonturen bearbeitet werden. Die Bearbeitung erfolgt beispielsweise durch kontinuierliche Verschweißung, aber auch im getakteten Betrieb. Insbesondere in diesem Fall kann die Vorrichtung so ausgebildet sein, daß ihre Andruckmittel jeweils nur im Taktfall die zum Zusammenpressen der Werkstücke 10 erforderlichen Andruckkräfte aufbringen, weil sie entsprechend taktweise gesteuert werden. Es ergibt sich dann eine geringere mechanische Beanspruchung der Werkstücke und/oder der Andruckmittel im Bereich der Schweißstelle 12 beim Durchlauf der Werkstücke 10.

## Patentansprüche

1. Vorrichtung zum Schweißen von Werkstücken (10) mit Laserstrahlung, insbesondere zum Verschweißen von Blechflanschen, bei der vor und hinter einer Schweißstelle (12) je ein Walzenpaar (13,14) mit das relativbewegte Werkstück zwischen sich führenden Walzen (22,22' oder 23,23') angeordnet ist, und mit einer Fokussiereinrichtung (26) für die Laserstrahlung, wobei die Walzenpaare (13,14) an einem Spannkörper (11) gelagert sind, der mit der Fokussiereinrichtung (26) der Laserstrahlung zu einer Handhabungseinheit zusammengebaut ist, **dadurch gekennzeichnet,** daß mindestens ein Walzenpaar als Antriebswalzenpaar ausbildet ist, und daß zwischen den beiden Walzenpaaren (13,14) im Bereich der Schweißstelle (12) relativ zu den Walzenpaaren (13,14) bewegliche, auf die Werkstükke (10) wirkende Andruckmittel vorhanden sind, die mit dem Spannkörper (11) eine Baueinheit bilden.

2. Vorrichtung nach Anspruch 1, **dadurch gekennzeichnet,** daß die Andruckmittel eine oberhalb der Schweißstelle (12) angeordnete Andruckplatte (16) aufweisen, die mit einer Durchlaßöffnung (17) für die Laserstrahlung versehen ist.

3. Vorrichtung nach Anspruch 1 oder 2, **dadurch gekennzeichnet,** daß die Andruckmittel einen unterhalb der Schweißstelle (12) angeordneten Gleitbock (18) aufweisen, der in einem die Werkstücke (10) im Bereich der Schweißstelle (12) druckbeaufschlagenden Abstand von der Andruckplatte (16) angeordnet ist.

4. Vorrichtung nach einem der Ansprüche 1 bis 3, **dadurch gekennzeichnet,** daß die Andruckplatte (16) und/oder der Gleitbock (18) im Spannkörper (11) vertikal verstellbar ist bzw. sind.

5. Vorrichtung nach einem der Ansprüche 1 bis 4, **dadurch gekennzeichnet,** daß die Durchlaßöffnung (17) der Andruckplatte (16) zur Schweißstelle (12) hin konisch verjüngt ausgebildet ist und/oder quer zum Laserstrahl orientierte Blas- und/oder Gasableitungskanäle (19) oder -einrichtungen aufweist.

6. Vorrichtung nach einem der Ansprüche 1 bis 5, **dadurch gekennzeichnet,** daß der Gleitbock (18) im Bereich der Schweißstelle (12) eine die ausgeführte Schweißnaht frei lassende Nut (20) aufweist, die bedarfsweise mit einem Gaskanal (21) in Verbindung steht.

7. Vorrichtung nach einem der Ansprüche 1 bis 6, **dadurch gekennzeichnet,** daß jedes Antriebswalzenpaar (13,14) mindestens eine austauschbare Walze (22,22',23, 23') unterschiedlichen Durchmessers aufweist und/oder daß das Zahnradgetriebe (24) mit druckbeaufschlagten Walzen (22, 22',23,23') kardanisch aufgebaut ist.

8. Vorrichtung nach einem der Ansprüche 1 bis 7, **dadurch gekennzeichnet,** daß die Umfangsoberfläche der Walzen (22,22',23,23') gerändelt ist oder einen Reibbelag aufweist.

9. Vorrichtung nach einem der Ansprüche 1 bis 8, **dadurch gekennzeichnet**, daß der Spannkörper (11) ein Zahnradgetriebe (24) hat, das die eingeleiteten Antriebskräfte auf alle vier Antriebswalzen (22,22',23, 23') gleichförmig verteilt.

10. Vorrichtung nach einem der Ansprüche 1 bis 9, **dadurch gekennzeichnet,** daß die Antriebskräfte der Antriebswalzen (22,22',23,23') von einem am Spannkörper (11) fest angeflanschten Antriebsmotor erzeugt oder mit einer flexiblen Welle (25) von einem extern angeordneten Antriebsmotor dem Zahnradgetriebe (24) zugeleitet werden.

11. Vorrichtung nach einem der Ansprüche 1 bis 10, **dadurch gekennzeichnet**, daß die Walzenpaare (13,14) paarweise fest montierte Walzen (22,22',23,23') haben und im Abstand paarweise zueinander einstellbar sind.

12. Vorrichtung nach einem der Ansprüche 1 bis 11, **dadurch gekennzeichnet,** daß die Fokussiereinrichtung (26) im Winkel und/ oder im Abstand zur Schweißstelle (12) einstellbar ist.

13. Vorrichtung nach einem der Ansprüche 1 bis 12, **dadurch gekennzeichnet,** daß sie das Vorhandensein eines Werkstücks (10) an der Schweißstelle (12) überprüfende und den Laser im Vorhandenseinsfall freigebende Sensoren (27) aufweist.

14. Vorrichtung nach einem der Ansprüche 1 bis 13, **dadurch gekennzeichnet,** daß sie eine Sensorik (29) aufweist, mit der ein Plasma der Schweißstelle (12) durch die Durchlaßöffnung (17) der Andruckplatte (16) hindurch zu überwachen ist.

## Claims

1. Apparatus for the welding of workpieces (10) using laser radiation, particularly for the welding together of sheet metal flanges, in which respective pairs of rollers (13, 14) are arranged in advance of and following a welding station (12), each pair of rollers comprising rollers (22, 22' or 23, 23') guiding the relatively moved workpiece therebetween, and comprising a focusing device (26) for the laser radiation, wherein the roller pairs (13, 14) are mounted on a clamping member (11) which is assembled together with the focusing device (26) for the laser radiation as a manipulable unit, **characterised in that** at least one roller pair is formed as a driving roller pair, and that between the two roller pairs (13, 14) in the region of the welding station (12) there are provided pressure means acting on the workpiece (10) and movable relative to the roller pairs (13, 14), said pressure means forming a structural unit with the clamping member (11).

2. Apparatus according to claim 1, **characterised in that** the pressure means includes a pressure plate (16) arranged above the welding station (12), said pressure plate being provided with an aperture (17) therethrough for the laser radiation.

3. Apparatus according to claim 1 or 2, **characterised in that** the pressure means includes a sliding pedestal (18) arranged below the welding station (12), said sliding pedestal being arranged at a distance from the pressure plate (16) which exerts pressure against the workpiece (10) in the region of the welding station (12).

4. Apparatus according to one of claims 1 to 3, **characterised in that** the pressure plate (16) and/or the sliding pedestal (18) is or are vertically adjustable on the clamping member (11).

5. Apparatus according to one of claims 1 to 4, **characterised in that** the aperture (17) through the pressure plate (16) is tapered to narrow towards the welding station (12) and/or includes blowing and/or gaswithdrawal passages (19) or devices orientated transversely to the laser beam.

6. Apparatus according to one of claims 1 to 5, **characterised in that** the sliding pedestal (18) in the region of the welding station (12) has a groove (20) which gives free access to the weld seam being formed, said groove being in communication as required with a gas channel (21).

7. Apparatus according to one of claims 1 to 6, **characterised in that** each driving roller pair (13, 14) comprises at least one exchangeable roller (22, 22', 23, 23') of different diameter and/or that the gear drive (24) is assembled as a universal joint with pressure-exerting rollers (22, 22', 23, 23').

8. Apparatus according to one of claims 1 to 7, **characterised in that** the peripheral surface of the rollers (22, 22', 23, 23') is knurled or has a friction coating.

9. Apparatus according to one of claims 1 to 8, **characterised in that** the clamping member (11) includes a gear drive (24) which distributes the originating driving forces uniformly to all four driving rollers (22, 22', 23, 23').

10. Apparatus according to one of claims 1 to 9, **characterised in that** the driving forces of the driving rollers (22, 22', 23, 23') are produced by a driving motor which is flanged fixedly to the clamping member (11) or are fed to the gear drive (24) from an externally arranged driving motor by way of a flexible shaft (25).

11. Apparatus according to one of claims 1 to 10, **characterised in that** the roller pairs (13,14) have rollers (22, 22', 23, 23') mounted fixedly in pairs and are adjustable relative to one another in pairs in terms of their spacing.

12. Apparatus according to one of claims 1 to 11, **characterised in that** the focusing device (26) is adjustable in terms of its angle to and/or spacing from the welding station (12).

13. Apparatus according to one of claims 1 to 12, **characterised in that** it includes sensors (27) for sensing the presence of a workpiece (10) at the welding station (12) and for triggering the laser when the presence of a workpiece is detected.

14. Apparatus according to one of claims 1 to 13, **characterised in that** it comprises a sensor means (29) by which a plasma at the welding station (12) is monitored through the throughgoing aperture (17) of the pressure plate (16).

## Revendications

1. Dispositif pour souder des pièces (10) à l'aide d'un rayonnement laser, en particulier pour souder ensemble des brides en tôle, pour lequel on prévoit devant et derrière un poste de soudage (12) une paire de rouleaux (13, 14) formée de rouleaux (22, 22' ou 23, 23') qui guident entre eux la pièce soumise à un déplacement relatif, ainsi qu'un appareil de focalisation (26) pour le rayonnement laser, les paires de rouleaux (13, 14) étant montées sur un corps de serrage (11) qui est relié à l'appareil de focalisation (26) du rayonnement laser pour former une unité de maniement, caractérisé en ce qu'au moins une paire de rouleaux est conçue comme une paire de rouleaux d'entraînement et en ce qu'il est prévu entre les deux paires de rouleaux (13, 14), dans la zone du poste de soudage (12), des moyens presseurs qui sont mobiles par rapport aux paires de rouleaux (13, 14), qui agissent sur les pièces (10) et qui forment avec le corps de serrage (11) une unité de montage.

2. Dispositif selon la revendication 1, caractérisé en ce que les moyens presseurs comportent une plaque de pression (16), disposée au-dessus du poste de soudage (12), qui est pourvue d'une ouverture de passage (17) pour le rayonnement laser.

3. Dispositif selon la revendication 1 ou 2, caractérisé en ce que les moyens de pression comportent un support coulissant (18), disposé au-dessous du poste de soudage (12), qui est disposé à une distance de la plaque de pression (16) qui soumet les pièces (10) à une contrainte de pression dans la zone du poste de soudage (12).

4. Dispositif selon l'une des revendications 1 à 3, caractérisé en ce que la plaque de pression (16) et/ou le support coulissant (18) sont réglables à la verticale dans le corps de serrage (11).

5. Dispositif selon l'une des revendications 1 à 4, caractérisé en ce que l'ouverture de passage (17) de la plaque de pression (16) va en s'effilant en cône en direction du poste de soudage (12) et/ou présente des conduits d'éjection et/ou des conduits (19) ou dispositifs d'évacuation de gaz orientés transversalement par rapport au rayon laser.

6. Dispositif selon l'une des revendications 1 à 5, caractérisé en ce que le support coulissant (18) présente dans la zone du poste de soudage (12) une rainure (20) qui dégage le cordon de soudure réalisé et qui communique au besoin avec un conduit de gaz (21).

7. Dispositif selon l'une des revendications 1 à 6, caractérisé en ce que chaque paire de rouleaux d'entraînement (13, 14) comporte au moins un rouleau échangeable (22, 22', 23, 23') de diamètre différent et/ou en ce que l'engrenage (24) a une construction à la cardan avec des rouleaux (22, 22', 23, 23') contraints par pression.

8. Dispositif selon l'une des revendications 1 à 7, caractérisé en ce que la surface circonférencielle des rouleaux (22, 22', 23, 23') est moletée ou présente un revêtement de friction.

9. Dispositif selon l'une des revendications 1 à 8, caractérisé en ce que le corps de serrage (11) a un engrenage (24) qui répartit uniformément sur les quatre rouleaux d'entraînement (22, 22', 23, 23') les forces d'entraînement introduites.

10. Dispositif selon l'une des revendications 1 à 9, caractérisé en ce que les forces d'entraînement des rouleaux d'entraînement (22, 22', 23, 23') sont générées par un moteur d'entraînement bridé fermement au corps de serrage (11) ou sont transmises à l'engrenage (24) à l'aide d'un arbre flexible (25) à partir d'un moteur d'entraînement disposé à l'extérieur.

11. Dispositif selon l'une des revendications 1 à 10, caractérisé en ce que les paires de rouleaux (13, 14) ont des rouleaux (22, 22', 23, 23') montés fixement par paires et leur écartement est réglable par paires.

12. Dispositif selon l'une des revendications 1 à 11, caractérisé en ce que l'angle et/ou l'écartement de l'appareil de focalisation (26) par rapport au poste de soudage (12) sont réglables.

13. Dispositif selon l'une des revendications 1 à 12, caractérisé en ce qu'il comporte des capteurs (27) qui vérifient la présence d'une pièce (10) au niveau du poste de soudage (12) et qui déclenchent le laser s'il y a une pièce.

14. Dispositif selon l'une des revendications 1 à 13, caractérisé en ce qu'il comporte un système de capteurs (29) grâce auquel un plasma du poste de soudage (12) peut être surveillé à travers l'ouverture de passage (17) de la plaque de pression (16).
